(19) Europäisches Patentamt
European Patent Office
Office européen des brevets

(11) Veröffentlichungsnummer: **0 150 373**
**A2**

(12) # EUROPÄISCHE PATENTANMELDUNG

(21) Anmeldenummer: **84115099.8**

(51) Int. Cl.⁴: **G 10 K 11/16**

(22) Anmeldetag: **10.12.84**

(30) Priorität: **16.12.83 DE 3345507**

(43) Veröffentlichungstag der Anmeldung: **07.08.85**
**Patentblatt 85/32**

(84) Benannte Vertragsstaaten: **AT DE NL**

(71) Anmelder: **Rheinhold & Mahla GmbH,**
**Gneisenaustrasse 15, D-8000 München 50 (DE)**

(72) Erfinder: **Jehle, Norbert, Josef-Fleuchans-Strasse 7,**
**D-6831 Plankstadt (DE)**

(74) Vertreter: **Michelis, Theodor, Dipl.-Ing. et al,**
**Gneisenaustrasse 15, D-8000 München 50 (DE)**

(54) **Schwingungsdämpfer.**

(57) Der Schwingungsdämpfer zur Absorption von Biege- und Longitudinalwellen besteht aus einer Vielzahl auf einer Wellenlänge angeordneten Massenelementen (3) mit mindestens teilweise drei translatorischen und rotatorischen Freiheitsgraden, die untereinander und mit dem zu dämpfenden Gegenstand (2) über elastische, schwingungsdämpfende Verbund-Stoffe (4) verbunden sind.

1
5
4
3
2

EP 0 150 373 A2

0150373

Rheinhold & Mahla GmbH

8000 München
Gneisenaustr. 15
Kr/ABc

15. Dez. 1983

Schwingungsdämpfer

Die Erfindung betrifft einen Schwingungsdämpfer zur Absorption von Biege- und Longitudinalwellen, bestehend aus Massenelementen und Federn, die mit dem zu dämpfenden Gegenstand verbunden sind.

Wegen der steigenden Umweltbelästigung durch schwingende Maschinen hat die Beseitigung dieser Störungen zur Vermeidung von Schäden an Mensch und Material in den letzten Jahren immer mehr Bedeutung gewonnen. Insbesondere galt es, Biege- und Longitudinalwellen im unteren Frequenzbereich technisch und wirtschaftlich abzuschirmen.

Bekannt sind einschichtige Dämpfungsbeläge zur Entdrohnung dünner Bleche und mehrschichtige (Sandwich)Beläge zur Körperschalldämpfung auch dicker Bleche.

Der Nachteil dieser Beläge besteht vor allen Dingen darin, daß höchstens eine Ausbreitungsdämpfung von 5 dB/Wellenlänge erreicht wird. Dieses zu erzielende Ergebnis genügt nicht mehr den heutigen Anforderungen.

Der Erfindung liegt die Aufgabe zugrunde, eine Vorrichtung und ein Verfahren zur Dämpfung von Biege- und Longitudinalwellen in Bauteilen - insbesondere Schalen - zu finden, welches Schalldämpfungen von 20 dB/Wellenlänge auch tiefer Frequenzen erlaubt.

Die Aufgabe wird erfindungsgemäß dadurch gelöst, daß über elastische, schwingungsdämpfende Verbund-Stoffe als Federn einzelne Massenelemente jeweils unter Beibehaltung von mindestens teilweise drei rotatorischen und drei translatorischen Freiheitsgraden zu einem Absorbersystem verbunden sind, wobei eine große Anzahl von Massenelemente pro Abmessung einer Wellenlänge der zu dämpfenden Schwingung in räumlicher Struktur angeordnet sind.

Da die Lage der Massenelemente beliebig im Raum vorgegeben werden kann, solange sie untereinander bzw. an der Berührungsfläche mit dem zu dämpfenden Gegenstand durch einen elastischen Verbund-Stoff verbunden sind, besitzt das Absorbersystem rotatorische und translatorische Freiheitsgrade, so daß die Schwingungen Reaktionskräfte am Gegenstand erzeugen, die zu einer starken Dämpfung der quer zur Oberfläche verlaufenden Biegewellen führen, indem ein Teil der Schwingungsenergie innerhalb des elastischen Verbund-Stoffes in Wärme umgewandelt wird. Durch die erfindungsgemäße Konstruktion kann eine Dämpfung um 20 dB/m und mehr bei Platten fast beliebiger Dicke auch im niederfrequenten Bereich erzielt werden.

Die Anzahl von Massenelementen sollte mehr als 20 vorzugsweise mehr als 50 betragen.

Ferner hat sich gezeigt, daß je nach Art der Massenelemente und Federeigenschaften trotz gleicher Dämpfung der Grundschwingung die höheren Moden verschieden zu beeinflussen und damit zu optimieren sind.

Das Absorbersystem mit den kleineren Massen und den steiferen Federeigenschaften ergab bessere Dämpfungswerte. Bezogen auf die gleiche Gesamtmasse des Absorbersystems muß die Anzahl der Einzelschwinger mit wachsender Frequenz zunehmen. Es wurde außerdem festgestellt, daß bei gleicher Frequenz und bei gleichem Flächengewicht des Absorbersystems die Dämpfung etwa proportional der Anzahl der Einzelschwinger zunimmt - dies allerdings nur dann, wenn die Massenelemente bzw. Federkonstanten im optimalen Bereich für diese Frequenz liegen.

In einer besonderen Ausführungsform besitzen die Massenelemente eine regelmäßige Struktur.

Durch ein einfach herzustellendes, regelmäßiges Haufwerk, z.B. Stahlkugeln durch Kunststoff verbunden, können Schwingungen in einem schmalen Frequenzspektrum ausgezeichnet gedämpft werden.

In einer anderen Ausführungsform sind verschiedene Massenelemente in einer unregelmäßigen Struktur angeordnet.

Durch Änderung der Massen der Massenelemente und/oder der Federsteifigkeit des elastischen Stoffes senkrecht zum Gegenstand kann ein breites Band an Frequenzen gedämpft werden. So kann eine hohe Frequenzabstimmung dadurch erzielt werden, daß ein Absobersystem mit geringer Dicke und/oder leichten Massenelementen verwendet wird, während für tiefe Frequenzen große Dicken mit schweren Massenelementen besonders geeignet sind. Aus wirtschaftlichen Gründen ist ein stufenweiser Aufbau vorteilhaft, bei dem die Summe der Massenelemente pro Raumeinheit mit Annäherung an die Störquelle zunimmt. Eine Breitbandbedämpfung tritt insbesondere dann auf, wenn das Absorbersystem - beginnend am Gegenstand - hintereinander aus einer Dämpfungsschicht aus vielen kleinen und schweren Massenelementen mit einem steifen Verbundstoff, einer Dämpfungsschicht aus leichten Massenelementen mit einem relativ steifen Verbund-Stoff und einer äußeren Dämpfungsschicht aus leichten Massenelementen mit einer weichen Verbundschicht besteht.

In einer bevorzugten Ausführungsform bestehen die Massenelemente aus Mineralien mit Abmessungen größer als 2 mm insbesondere größer als 6 mm.

Mineralien in Form von natürlichem Kies oder gebrochenem Fels stehen preiswert zur Verfügung und erlauben nach vorheriger Sortierung durch Aussiebung, beliebige Strukturen zu einer vorgebenen Abstimmung zusammenzufügen, wobei durch Bevorzugung einer bestimmten Anordnung der meist geometrisch ungleichmäßigen Kiesel Freiheitsgrade in erwünschten Richtungen gefördert werden können.

In einer weiteren Ausführungsform besitzt der elastische Verbund-Stoff einen E-Modul von ca. 300 $N/mm^2$ und einen Verlustfaktor von ca. 0,3.

Durch elastische Verbund-Stoffe, die vorzugsweise aus gießfähigen, aushärtenden Kunststoffen oder Bitumen bestehen, können je nach Umfang und Stärke der Kontaktbereiche die Massenelemente mehr oder minder steif miteinander verbunden sein, um die Energie von dem schwingenden Gegenstand in den Resonanzschwinger zu übertragen. Dabei ist es vorteilhaft, zusätzlich durch entsprechende Wahl eines E-Moduls größer als 500 $N/mm^2$ die Anpassung zu optimieren, wobei mit zunehmender Biegesteifigkeit der Schale des schwingenden Gegenstandes auch die Federsteifigkeit des Verbund-Stoffes zunehmen sollte. Andererseits sollte der Verlustfaktor $\geq$ 0,1 sein, um einen möglichst großen Teil der Schwingungsenergie in Wärme umzuwandeln.

In einer möglichen Ausführungsform sind innerhalb des elastischen Verbund-Stoffes Festkörper verteilt angeordnet.

Durch die Einlagerung von weichen Festkörpern (z.B. Kork) kann die Frequenz des Schwingungsdämpfers erniedrigt werden, wobei diese im allgemeinen wegen ihrer Eigenschaften gleichzeitig mit zur Schwingungsdämpfung hinzugezogen werden. Als weiterer Vorteil ist ein geringes Gewicht zu nennen.

In einer vorteilhaften Ausführungsform besteht das Absorbersystem aus einem räumlich durchgehenden Gebilde.

Das durchgehende Gebilde ist wenig schmutzanfällig und läßt sich bei Anfertigung auf dem Gehäuse auch komplizierten Raumformen anpassen.

In einer detaillierten Ausführungsform besteht das Absorbersystem aus einzelnen Körpern.

Durch einzelne Körper kann die Resonanzfrequenz wegen größerer Biegeweichheit tiefer abgestimmt werden, wobei die Körper zur einfacheren Fertigung und zum Schutz gegen Feuer sowie mechanische Verletzung mindestens teilweise mit Blech (Dosen) umgeben sein können.

In einer Ausführungsform ist mindestens ein Teil des Absorbersystems über steife Halterungen mit dem schwingenden Gegenstand verbunden.

Über diese steifen Halterungen ist es möglich, auch bei beengten Raumverhältnissen, wie sie auf Schiffen anzutreffen sind, Absorbersysteme mit dem schwingenden Gegenstand (Schiffsdiesel-Fundamentrahmen) zu verbinden und gute Dämpfungen zu erzielen, wobei durch steife Halterungen senkrecht zur schwingenden Oberfläche auch Longitudinalwellen bedämpft werden können.

Bei diesem Schwingungsdämpfer, der insbesondere für schalenartige Bauteile geeignet ist, werden die Kräfte aus dem schwingenden Gegenstand durch Resonanz auf das Absorbersystem übertragen. Dabei werden die Kräfte aus den Biege- bzw. Longitudinalwellen durch Ankopplung in die über schwingungsdämpfende Stoffe nach- und untereinander verbundenen Massenelement weitergeleitet, die aufgrund der mindestens teilweise drei rotatorischen und translatorischen Freiheitsgrade Bewegungen ausführen, die zu Reaktionskräften am zu dämpfenden Gegenstand und zur Wärmeentwicklung im elastischen Stoff führen. Dabei werden die Kräfte durch entsprechende Massen der Massenelemente und Federung des Stoffes beeinflußt.

Beispiele der Erfindung sind in den Zeichnungen dargestellt und werden nachstehend erläutert. Es zeigen:

Fig. 1 Absorbersystem aus Massenelementverbindungen durch Verbund-Stoff,
Fig. 2 Körper in einer Dose,
Fig. 3 durchgehendes Absorbersystem,
Fig. 4 aufgeständerte Absorbersysteme und
Fig. 5 Halterung für Absorbersysteme.

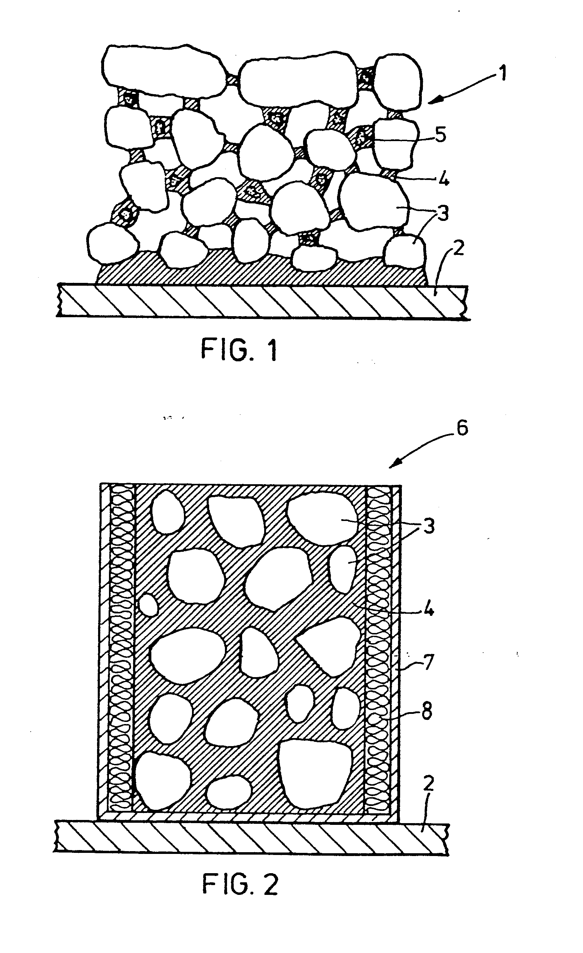

In Fig. 1 ist ein Absorbersystem 1 dargestellt, bei dem auf einem schwingenden Gegenstand 2 Massenelemente 3 aus Mineralien (Kieselsteine) angeordnet sind, wobei diese mit dem Gegenstand 2, und mindestens in bestimmten Bereichen untereinander, durch einen elastischen Verbund-Stoff 4 in Form eines aushärtenden Kunststoffharzes verbunden sind, in dem teilweise als Festkörper 5 Kork eingelagert ist.

In Fig. 2 ist von einem Absorbersystem 1 nur ein einzelner Körper 6 dargestellt, der aus einer am Gegenstand befestigten Dose 7 aus Blech besteht. Die Innenwand der Dose 7 ist mit einem elastischen Material 8 aus Mineralwolle ausgekleidet. Der Kernraum ist mit einer Mischung 9 aus Mineralien (Split, Schotter) als Massenelemente 3 und Bitumen als elastischer Verbund-Stoff 4 ausgegossen, der nach dem Erkalten erhärtet.

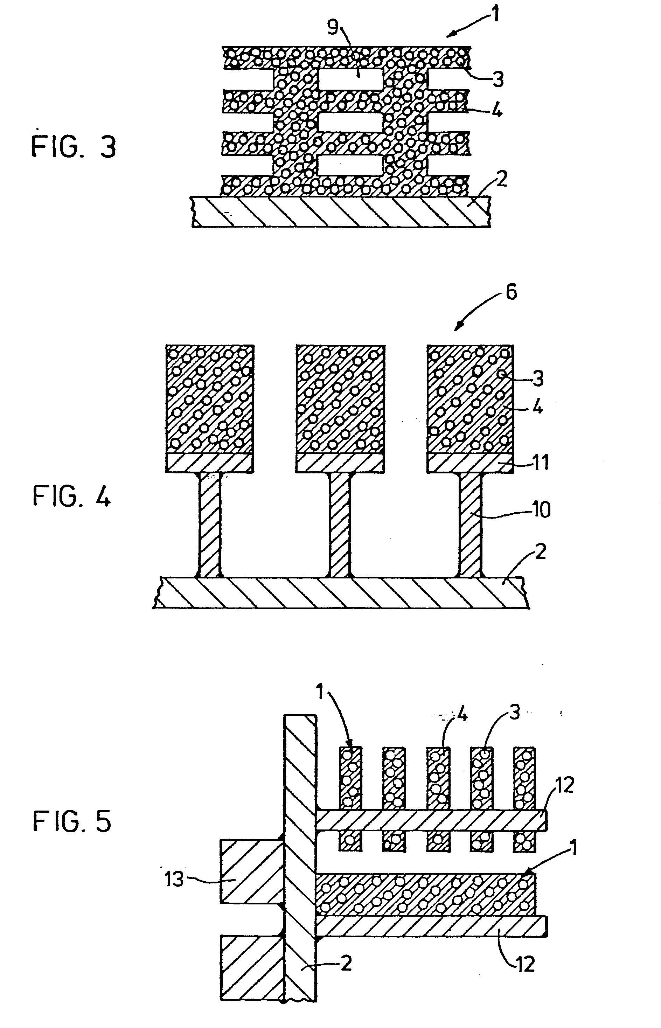

In Fig. 3 ist ein durchgehendes Absorbersystem 1, welches dem Verlauf der Schale des Gegenstandes 2 gut angepaßt werden kann, gezeichnet. Die Massenelemente 3 aus Stahlkugeln sind in einen elastischen Verbund-Stoff 4 aus PUR eingebettet, wobei das Absorbersystem 1 durch einzelne oder durchgehende Hohlräume 9 gegliedert ist.

In Fig. 4 sind für tieffrequente Abstimmung an dem Gegenstand Stäbe 10 mit Tellern 11 befestigt, die wiederum das Absorbersystem 1 aus Massenelementen 3, gekoppelt durch elastischen Verbund-Stoff 4, tragen.

In Fig. 5 ist eine Lösung insbesondere zur Dämmung von Longitudinalwellen gezeigt. Der zu bedämpfende Gegenstand ist mit angeschweißten, steifen Platten als Halterung 12 versehen, die je nach geförderter Breitbandigkeit einen durchgehenden oder mehrere einzelne Körper 6 als Absorbersysteme 1 besitzen, wobei die Querschnittserweiterungen 13 zur Reflexion der Longitudinalwellen angeordnet sind.

Patentansprüche

1. Schwingungsdämpfer zur Absorption von Biege- und Longitudinalwellen, bestehend aus Massenelementen und Federn, die mit dem zu dämpfenden Gegenstand verbunden sind, dadurch gekennzeichnet, daß über elastische, schwingungsdämpfende Verbund-Stoffe (4) als Federn einzelne Massenelemente (3) jeweils unter Beibehaltung von mindestens teilweise drei rotatorischen und drei translatorischen Freiheitsgraden zu einem Absorbersystem (1) verbunden sind, wobei eine große Anzahl von Massenelementen (3) pro Abmessung einer Wellenlänge der zu dämpfenden Schwingung in räumlicher Struktur angeordnet sind.

2. Schwingungsdämpfer nach Anspruch 1, dadurch gekennzeichnet, daß die Massenelemente (3) eine regelmäßige Struktur besitzen.

3. Schwingungsdämpfer nach Anspruch 1, dadurch gekennzeichnet, daß verschiedene Massenelemente (3) in einer unregelmäßigen Struktur angeordnet sind.

4. Schwingungsdämpfer nach Ansprüchen 1-3, dadurch gekennzeichnet, daß die Massenelemente (3) aus Mineralien mit Abmessungen größer als 2 mm bestehen.

5. Schwingungsdämpfer nach Ansprüchen 1-4, dadurch gekennzeichnet, daß der elastische Verbund-Stoff (4) einen E-Modul größer als 500 $N/mm^2$ und einen Verlustfaktor $\geq$ 0,1 besitzt.

6. Schwingungsdämpfer nach Ansprüchen 1-5, dadurch gekennzeichnet, daß innerhalb des elastischen Verbund-Stoffes (4) Festkörper (5) verteilt angeordnet sind.

7. Schwingungsdämpfer nach Ansprüchen 1-6, dadurch gekennzeichnet, daß das Absorbersystem (1) aus einem räumlich durchgehenden Gebilde besteht.

8. Schwingungsdämpfer nach Ansprüchen 1-7, dadurch gekennzeichnet, daß das Absorbersystem (1) aus einzelnen Körpern (6) besteht.

9. Schwingungsdämpfer nach Ansprüchen 1-8, dadurch gekennzeichnet, daß mindestens ein Teil des Absorbersystems über steife Halterungen (12) mit dem schwingenden Gegenstand (2) verbunden ist.

1
5
4
3
2

FIG. 1

6
3
4
7
8
2

FIG. 2

1
9
3
4
2
6
3
4
11
10
2
1
4
3
12
1
13
2
12

FIG. 3

FIG. 4

FIG. 5